# EUROPEAN PATENT APPLICATION

(11) **EP 4 814 079 A1**
(43) Date of publication of application: **30.09.2026**
(21) Application number: 25876054.5
(22) Date of filing: 22.09.2025
(51) Int. Cl.: C09K 19/52

(54) **LIQUID CRYSTAL CAPSULE, AND CAPSULE SOLUTION, OPTICAL FILM, OPTICAL DEVICE, AND VARIABLE TRANSMITTANCE DEVICE USING SAME**

(30) Priority: 10.02.2025 KR 20250016670
(71) Applicant: LG Chem, Ltd., Yeongdeungpo-gu Seoul 07336 (KR)
(72) Inventor: KIM, Yunseop, Daejeon 34122 (KR); SEOK, Jin Ah, Daejeon 34122 (KR); KIM, Yeji, Daejeon 34122 (KR); KIM, Jee Seon, Daejeon 34122 (KR)
(74) Representative: Hoffmann Eitle
(86) International application number: PCT/KR2025/014730
(87) International publication number: WO 2026/168668

(57) **Abstract**

The present invention relates to a liquid crystal capsule, comprising: a core containing liquid crystal and an emulsifier; and a polymer shell formed on a surface of the core; wherein the emulsifier comprises a polyglyceryl monoester compound or a polyglyceryl diester compound.

## Description

### [TECHNICAL FIELD]

### CROSS-REFERENCE TO RELATED APPLICATION(S)

This application claims the benefit of Korean Patent Application No. 10-2025-0016670 filed on February 10, 2025 with the Korean Intellectual Property Office, the disclosures of which are herein incorporated by reference in their entirety.

The present invention relates to a liquid crystal capsule, and capsule solution, optical film, optical device, transmittance variable device using the same that may induce a high haze variation rate even at a lower voltage.

### [BACKGROUND ART]

Polymer Dispersed Liquid Crystals (PDLC) films are applicable to high-luminance projection displays or high-contrast reflective display devices, and are composite materials in which liquid crystal molecular domains of several micrometers are dispersed in a polymer between conductive films. The driving principle of the PDLC is that light incident on a polymer layer in which liquid crystal is dispersed is scattered by a difference in refractive index between the liquid crystal and the polymer to be in an opaque state, but by applying an electric field thereto, the direction of the liquid crystal is aligned and the refractive index is changed, thereby controlling scattering and transmission of light to become a transparent state.

As such, PDLC devices do not require a separate polarizer and thus do not require a polarizing plate in terms of structure, and do not require an alignment process in terms of process, so that the PDLC devices may be manufactured by a simple method. Accordingly, the PDLC devices may be applied to smart glass and smart screens for buildings and automobiles corresponding to switchable windows, and may also be applied as black PDLC films for transparent OLEDs. In addition, the PDLC devices may be manufactured in a flexible form depending on a material used as a substrate.

Specifically, a liquid crystal-based smart window refers to an active window capable of controlling transmittance with glass including a separate liquid crystal layer, and is a technology applicable to the field of mobility as well as buildings. Through conventional polymer dispersed liquid crystal (PDLC) technology, liquid crystal domains having a size of several µm could be manufactured by mixing a monomer capable of light or thermal polymerization with liquid crystal and by phase separation between the polymer and the liquid crystal occurring during polymerization. The PDLC film may implement a light-shielding/transmission mode as the liquid crystal within the domains of several µm size has a refractive index that matches/mismatches with a polymer matrix according to voltage application on/off.

In particular, in a case of manufacturing a color-type PDLC including a dye, there is a problem that anisotropic dyes are not uniformly aligned in a polymer according to an electric field, and in particular, a problem of contamination of a polymer matrix by the dye occurs. Accordingly, various studies are being conducted on a liquid crystal composite having a capsule structure in which liquid crystal and anisotropic dyes are encapsulated in a polymer shell to have excellent mechanical properties and high uniformity, and to prevent contamination of the polymer matrix by the dye.

However, as the liquid crystal and the anisotropic dye are encapsulated in the polymer shell, the liquid crystal encapsulated in the capsule has a limitation in that the alignment of the liquid crystal is changed only when a higher voltage is applied due to a high interaction occurring as a contact area with a material contained in the capsule shell increases.

### [DETAILED DESCRIPTION OF THE INVENTION]

### [Technical Problem]

The present invention is to provide a liquid crystal capsule that may induce a high haze variation rate even at a lower voltage.

In addition, the present invention is to provide capsule solution, optical film, optical device, transmittance variable device using the liquid crystal capsule.

### [Technical Solution]

In order to solve the above problem, in this specification, there is provided a liquid crystal capsule, comprising: a core containing liquid crystal and an emulsifier; and a polymer shell formed on a surface of the core; wherein the emulsifier comprises a polyglyceryl monoester compound or a polyglyceryl diester compound.

This specification also provides a capsule solution, comprising the liquid crystal capsule and a solvent.

This specification also provides an optical film, comprising the liquid crystal capsule.

This specification also provides an optical device, comprising the optical film.

This specification also provides a transmittance variable device, comprising the optical film.

Hereinafter, a liquid crystal capsule, and capsule solution, optical film, optical device, transmittance variable device using the same according to specific embodiments of the invention will be explained in detail.

Unless explicitly stated herein, the technical terms used herein are for the purpose of describing specific embodiments only and is not intended to limit the scope of the invention.

As used herein, the singular forms also include the plural forms unless the context clearly dictates otherwise.

It should be understood that the terms "comprise," "include", "have", etc. are used herein to specify the presence of stated feature, region, integer, step, action, element and/or component, but do not preclude the presence or addition of one or more other feature, region, integer, step, action, element, component and/or group.

Further, the terms including ordinal numbers such as "a first", "a second", etc. are used only for the purpose of distinguishing one component from another component, and are not limited by the ordinal numbers. For instance, a first component may be referred to as a second component, or similarly, the second component may be referred to as the first component, without departing from the scope of the present disclosure.

Further, the derivative compound refers to a compound changed within a limit that does not significantly change a structure and properties of a parent body, such as introduction of a functional group, oxidation, reduction, and substitution of atoms, when an organic compound is the parent body.

Further, the term "substituted" means that another functional group is bonded instead of a hydrogen atom in a compound, and a position to be substituted is not limited as long as it is a position where the hydrogen atom is substituted, that is, a position where a substituent may be substituted, and in a case where two or more substituents are substituted, the two or more substituents may be the same as or different from each other.

Further, the term "substituted or unsubstituted" means being substituted or unsubstituted with one or more substituents selected from the group consisting of deuterium; a halogen group; a cyano group; a nitro group; a hydroxy group; a carbonyl group; an ester group; an imide group; an amide group; a primary amino group; a carboxy group; a sulfonic acid group; a sulfonamide group; a phosphine oxide group; an alkoxy group; an aryloxy group; an alkylthioxy group; an arylthioxy group; an alkylsulfoxy group; an arylsulfoxy group; a silyl group; an alkyl group; a cycloalkyl group; an alkenyl group; an aryl group; an aralkyl group; an aralkenyl group; an alkylaryl group; an alkoxysilylalkyl group; an arylphosphine group; and a heterocyclic group containing one or more of N, O, and S atoms, or being substituted or unsubstituted with a substituent in which two or more substituents among the substituents exemplified above are connected. For example, "a substituent in which two or more substituents are connected" may be a biphenyl group.

Further, the weight average molecular weight refers to a polystyrene-converted weight average molecular weight measured by gel permeation chromatography(GPC). In the process of measuring the polystyrene-converted weight average molecular weight measured by GPC, a detector and an analytical column, such as a commonly known analysis apparatus and differential refractive index detector can be used, and commonly applied temperature conditions, solvent, and flow rate can be used. Specific examples of the measurement condition are as follows: Waters PL-GPC220 instrument was used and a Polymer Laboratories PLgel MIX-B 300 mm length column was used. An evaluation temperature was 160°C, and 1,2,4-trichlorobenzene was used for a solvent at a flow rate of 1 mL/min. Samples were prepared at a concentration of 10 mg/10 mL and then supplied in an amount of 200 µL, and the values of Mw could be determined using a calibration curve formed using a polystyrene standard.

Now, the present disclosure will be described in more detail.

### 1. Liquid crystal capsule

According to one embodiment of the invention, a liquid crystal capsule, comprising: a core containing liquid crystal and an emulsifier; and a polymer shell formed on a surface of the core; wherein the emulsifier comprises a polyglyceryl monoester compound or a polyglyceryl diester compound.

The present inventors have confirmed through experiments that, like the liquid crystal capsule of the one embodiment, by using a polyglyceryl monoester or a polyglyceryl diester compound as an emulsifier contained together with liquid crystal in an inner core of the capsule, anchoring energy with a surface which the liquid crystal contacts is reduced, and thus a high haze variation rate may be induced even at a lower voltage, and have completed the invention.

Specifically, the liquid crystal capsule of the one embodiment may include a core containing liquid crystal. The liquid crystal capsule structure according to the present invention is characterized by containing liquid crystal inside encapsulated by a shell made of a polymer. Through this, uniformity of liquid crystal particles may be improved.

The liquid crystal is not particularly limited, but nematic liquid crystal, smectic liquid crystal, cholesteric liquid crystal, chiral nematic liquid crystal, and the like may be exemplified. Specific types of liquid crystal compounds are not limited, and various conventionally known liquid crystals may be used without limitation. The liquid crystal compound is not particularly limited, but may be composed of a fluorine-based or cyan-based, or a mixture thereof.

The liquid crystal may have a dielectric anisotropy (△ε) of 10 or more, or 13.5 or more, or 14 or more, or 15 or more, or 20 or less, or 10 to 20, or 13.5 to 20, or 14 to 20, or 15 to 20. Since liquid crystal molecules are aligned in a direction of an electric field within the range, the liquid crystal may be applied to an optical film that increases transmittance by applying a voltage. In addition, since refraction of light occurs significantly, an optical film that is more opaque than when no voltage is applied may be manufactured. The dielectric anisotropy (△ε) refers to a difference value between an extraordinary dielectric anisotropy (εₑ, dielectric anisotropy in a long-axis direction) and an ordinary dielectric anisotropy (ε₀, dielectric anisotropy in a short-axis direction). A method of measuring the dielectric anisotropy of the liquid crystal contained in the liquid crystal capsule is not limited, and various conventionally known methods may be applied without limitation.

Further, the liquid crystal may have a refractive index anisotropy (△n) of 0.2 or more, or 0.21 or more, or 0.22 or more, or 0.5 or less, or 0.2 to 0.5, or 0.21 to 0.5, or 0.22 to 0.5. Within the range, a liquid crystal cell capable of switching between a haze mode having excellent haze characteristics and a non-haze mode may be implemented. The refractive index anisotropy (△n) refers to a difference value between an ordinary refractive index and an extraordinary refractive index. A method of measuring the refractive index anisotropy of the liquid crystal contained in the liquid crystal capsule is not limited, and various conventionally known methods may be applied without limitation.

Meanwhile, there is provided the core which may further include an emulsifier. The emulsifier is a surfactant used for forming liquid crystal droplets, and may induce a high haze variation rate even at a lower voltage.

The emulsifier may comprise a polyglyceryl monoester compound or a polyglyceryl diester compound. The polyglyceryl monoester compound may refer to a compound having one ester group in a molecule among ester compounds derived from the polyglyceryl. In addition, the polyglyceryl diester compound may refer to a compound having two ester groups in a molecule among ester compounds derived from the polyglyceryl.

The polyglyceryl monoester compound or the polyglyceryl diester compound may have a weight average molecular weight of 3000 g/mol or less, or 2000 g/mol or less, or 1500 g/mol or less, or 1300 g/mol or less, or 100 g/mol or more, or 900 g/mol or more, or in a range of 100 g/mol to 3000 g/mol, or in a range of 100 g/mol to 2000 g/mol, or in a range of 100 g/mol to 1500 g/mol, or in a range of 100 g/mol to 1300 g/mol, or in a range of 900 g/mol to 3000 g/mol, or in a range of 900 g/mol to 2000 g/mol, or in a range of 900 g/mol to 1500 g/mol, or in a range of 900 g/mol to 1300 g/mol. In a case where the weight average molecular weight of the polyglyceryl monoester compound or the polyglyceryl diester compound is excessively increased, it may interfere with movement of liquid crystal molecules, thereby causing a high voltage and a low haze variation rate.

The polyglyceryl monoester compound or the polyglyceryl diester compound may be a reaction product of polyglyceryl and carboxylic acid.

In addition, the carboxylic acid may be an unsubstituted carboxylic acid. That is, in the carboxylic acid, other functional groups (for example, a hydroxy group) are not bonded instead of a hydrogen atom in a compound.

Specifically, the carboxylic acid may have a content of a hydroxy group less than 0.001 mol% based on 100 mol% of the carboxylic acid. That is, the carboxylic acid may not contain a hydroxy group, or may contain a hydroxy group in an extremely small amount. In a case where the content of the hydroxy group in the carboxylic acid is increased to 0.001 mol% or more based on 100 mol% of the carboxylic acid, it may interfere with movement of liquid crystal molecules, thereby causing a high voltage and a low haze variation rate.

The carboxylic acid may be a saturated carboxylic acid or an unsaturated carboxylic acid. The unsaturated carboxylic acid is a carboxylic acid containing a double bond between carbons in a molecule, and the saturated carboxylic acid is a carboxylic acid not containing a double bond between carbons in a molecule.

The carboxylic acid may have a carbon number in a range of 10 to 30, or in a range of 10 to 20, or in a range of 13 to 19, or in a range of 13 to 15, or in a range of 17 to 19.

Specific examples of the carboxylic acid may include oleic acid, myristic acid, or stearic acid.

More specifically, the polyglyceryl monoester compound may be at least one compound selected from the group consisting of polyglyceryl monooleate, polyglyceryl monomyristate, and polyglyceryl monostearate. That is, the polyglyceryl monoester compound may be polyglyceryl monooleate, polyglyceryl monomyristate, polyglyceryl monostearate, or a mixture of two or more thereof.

For a more specific example, the polyglyceryl monoester compound may be polyglyceryl-10 monooleate, polyglyceryl-10 monomyristate, polyglyceryl-10 monostearate, or a mixture of two or more thereof.

In addition, the polyglyceryl diester compound may be at least one compound selected from the group consisting of polyglyceryl dioleate, polyglyceryl dimyristate, and polyglyceryl distearate. That is, the polyglyceryl diester compound may be polyglyceryl dioleate, polyglyceryl dimyristate, polyglyceryl distearate, or a mixture of two or more thereof.

For a more specific example, the polyglyceryl diester compound may be polyglyceryl-10 dioleate, polyglyceryl-10 dimyristate, polyglyceryl-10 distearate, or a mixture of two or more thereof.

Meanwhile, based on 100 parts by weight of the liquid crystal, a content of the emulsifier may be in a range of 0.1 parts by weight to 50 parts by weight, or in a range of 0.1 parts by weight to 20 parts by weight, or in a range of 0.5 parts by weight to 20 parts by weight, or in a range of 1 part by weight to 20 parts by weight, or in a range of 5 parts by weight to 11 parts by weight. In a case where the content of the emulsifier is excessively decreased based on 100 parts by weight of the liquid crystal, vertical alignment of the liquid crystal by the emulsifier is induced, and thus there is a limit in that it is difficult to sufficiently induce a high transmittance variation rate even at a lower voltage. In addition, in a case where the content of the emulsifier is excessively increased based on 100 parts by weight of the liquid crystal, a problem may occur in that an excessive amount of the emulsifiers forms colloidal micelles, so that surface tension of a solution drops sharply.

Meanwhile, the core may further include an anisotropic dye. The anisotropic dye is not particularly limited as long as it is a dopable anisotropic dye, and specifically, the anisotropic dye may be S-428, M-483, M412 (Mitsui Fine Chemical), or the like.

Meanwhile, the core may further include a siloxane-based additive. The siloxane-based additive is an additive capable of lowering interfacial tension of the liquid crystal. Accordingly, the liquid crystal capsule in which the siloxane-based additive and the liquid crystal are contained together in the core may sufficiently lower surface anchoring energy of the liquid crystal in the capsule.

The siloxane-based additive may have a molar mass of 500 g/mol or less, or in a range of 100 g/mol to 500 g/mol. The siloxane-based additive may comprise a trisiloxane-based compound. The trisiloxane-based compound may comprise a trisiloxane compound or a derivative thereof. For a specific example, the siloxane-based additive may be octamethyltrisiloxane or hexamethylcyclotrisiloxane.

In particular, based on 100 parts by weight of the liquid crystal, a content of the siloxane-based additive may be in a range of 0.1 parts by weight to 50 parts by weight, or in a range of 0.1 parts by weight to 20 parts by weight, or in a range of 0.5 parts by weight to 20 parts by weight, or in a range of 0.5 parts by weight to 10 parts by weight, or in a range of 0.9 parts by weight to 1 part by weight. In a case where the content of the siloxane-based additive is excessively decreased based on 100 parts by weight of the liquid crystal, an effect of lowering interfacial tension of the liquid crystal by the siloxane-based additive is not sufficiently realized, and thus there is a limit in that surface anchoring energy of the liquid crystal in the capsule may not be sufficiently lowered. In addition, in a case where the content of the siloxane-based additive is excessively increased based on 100 parts by weight of the liquid crystal, a problem may occur in that the liquid crystal is changed from a state of the liquid crystal (mesophase state) to an isotropic liquid phase.

Meanwhile, the liquid crystal capsule of the embodiment may include a polymer shell formed on a surface of the core. The shell may be a single-layer shell made of a single polymer material, or may be a double-layer shell or a multi-layer shell of more than that made of different polymer materials for improved mechanical properties and particle uniformity. Accordingly, the uniformity of liquid crystal particles may be improved, and at the same time, a contamination problem caused by a dye may be improved.

The material forming the shell has the same refractive index as a matrix polymer in which a liquid crystal complex is dispersed, and specific examples thereof are not particularly limited, but, for example, the material may be selected from polyvinyl alcohol, polyurea, polyacrylic, polyurethane, polyamide including nylon, polyacetal, and polyester.

However, to give a specific example, the polymer shell formed on the surface of the core may be made of a polyvinyl alcohol (PVA) resin cross-linked with glyoxal. As for the type of PVA, there is no particular limitation, and various PVAs having different molecular weights or saponification degrees may be appropriately selected according to the purpose. As a cross-linking agent for cross-linking the PVA, glyoxal is used.

Meanwhile, an average diameter of the liquid crystal capsule may be 1 µm or more, or in a range of 1 µm to 500 µm. In a case where the average diameter of the liquid crystal capsule is excessively decreased, there is a problem in that a driving voltage is increased and thus power consumption is increased. In addition, in a case where the average diameter of the liquid crystal capsule is excessively increased, there is a problem in that visible light is scattered and thus haze is increased.

The liquid crystal capsule may be a group of individual particles having an average diameter of 1 µm or more, or in a range of 1 µm to 500 µm, and individual fine particles included in such a group may have a diameter of 1 µm or more, or in a range of 1 µm to 500 µm on average. More specifically, 95% or 99% of individual fine particles included in the group may have a diameter of 1 µm or more, or in a range of 1 µm to 500 µm.

The present application also provides a use of the liquid crystal capsule. The liquid crystal capsule of the present application may be used in various light modulation devices to which liquid crystal is applicable. Accordingly, there is provided a light modulation device having a substrate; and a liquid crystal layer formed on one surface of the substrate and including the liquid crystal capsule. Manufacturing methods and types of the light modulation device are well known in the art, and the light modulation device may be manufactured by using known manufacturing methods without limitation. The light modulation device includes, but is not limited to, a smart window, an isotropic film, a polarization control film, or a flexible LCD.

A manufacturing method of the liquid crystal capsule is not significantly limited, and various conventionally known manufacturing methods of a liquid crystal capsule may be applied without limitation. However, for example, there is provided a process comprising (1) preparing a mixed solution formed by mixing a solvent with mixed materials containing liquid crystal, an emulsifier, and polyvinyl alcohol (PVA), (2) forming droplets from the mixed solution, (3) disposing the polyvinyl alcohol (PVA) around the droplets, and (4) cross-linking the polyvinyl alcohol (PVA) by using a cross-linking agent to form a polymer shell surrounding the liquid crystal, thereby manufacturing the liquid crystal capsule in which the liquid crystal is encapsulated in the polymer shell.

In the process of preparing a mixed solution formed by mixing a solvent with mixed materials containing the liquid crystal, the emulsifier, and polyvinyl alcohol (PVA) in the above (1), the solvent is not particularly limited and may be appropriately selected according to the purpose, and for example, water such as pure water, such as ion-exchanged water, ultrafiltered water, reverse osmosis water, and distilled water, or ultrapure water may be used. Additives may be further introduced as necessary.

In the process of preparing a mixed solution formed by mixing a solvent with mixed materials containing the liquid crystal, the emulsifier, and polyvinyl alcohol (PVA) in the above (1), examples of a method of mixing the liquid crystal, the emulsifier, the polyvinyl alcohol (PVA), and additives with the solvent are not significantly limited, and various methods used in a conventionally known emulsification reaction may be applied without limitation. However, for example, a method of mixing the liquid crystal with a solution containing the solvent, the emulsifier, and the polyvinyl alcohol may be used, but is not limited thereto.

In the process of (2) forming droplets from the mixed solution, the droplets are dispersed in a dispersion medium, and more specifically, the droplets are dispersed in the dispersion medium in a state where the emulsifier covers around the liquid crystal.

As a method of preparing the droplets, a method of producing droplets by using a dispersion-type emulsification apparatus may be used.

As the dispersion-type emulsification apparatus, there is no particular limitation as long as droplets having a desired particle size are obtained, and the apparatus may be appropriately selected according to the purpose; for example, a homo mixer, which is an apparatus for mixing liquids, or a homogenizer, which is an apparatus for refining and unifying particles, may be used.

In addition, a dispersion method is not particularly limited, and for example, any dispersion technique among stirring, ultrasound, and high pressure may be used. In the present invention, as the dispersion-type emulsification apparatus, various dispersion-type emulsification apparatuses such as a high-speed homogenizer, an ultrasonic homogenizer, a high-pressure homogenizer, and a homo mixer may be used.

In addition, as a more preferable embodiment of the process of preparing droplets, there is provided a droplet preparation process including a first preparation step of preparing droplets by using a first dispersion-type emulsification apparatus, and a second preparation step of preparing droplets having a particle size smaller than the particle size obtained in the first preparation step by using a second dispersion-type emulsification apparatus.

As the first and second dispersion-type emulsification apparatuses, there is no particular limitation as long as droplets having a desired particle size are obtained, and for example, various dispersion-type emulsification apparatuses such as the high-speed homogenizer, the ultrasonic homogenizer, the high-pressure homogenizer, and the homo mixer described above may be used in an appropriate combination.

In the process of (3) disposing the polyvinyl alcohol (PVA) around the droplets, coacervation in which the PVA gathers around a liquid crystal composition may proceed under a droplet dispersion at a predetermined temperature. For example, it is preferable to set a solution temperature of the droplet dispersion in the coacervation process to room temperature or higher.

In the process of (4) cross-linking the polyvinyl alcohol (PVA) by using a cross-linking agent to form a polymer shell surrounding the liquid crystal, thereby manufacturing the liquid crystal capsule in which the liquid crystal is encapsulated in the polymer shell, the cross-linking reaction is preferably performed under an acidic condition. As the acidic condition, it is preferable that a pH is in a range of 1 to 5, and it is more preferable that the pH is about 3.

### 2. Capsule solution

Meanwhile, according to another embodiment of the invention, there may be provided a capsule solution comprising the liquid crystal capsule of the one embodiment and a solvent. The description regarding the liquid crystal capsule includes the contents described above with respect to the one embodiment.

The solvent is not particularly limited and may be appropriately selected according to a purpose, and for example, there is provided water such as pure water, such as ion-exchanged water, ultrafiltration water, reverse osmosis water, and distilled water, or ultrapure water.

In the capsule solution, the liquid crystal capsules are dispersed in the solvent. That is, the capsule solution may be a liquid crystal capsule dispersion liquid. The capsule solution may be used as a coating liquid for forming a liquid crystal layer. For example, the liquid crystal layer is formed by coating the capsule solution on a support substrate to form a film.

### 3. Optical film

Meanwhile, according to still another embodiment of the invention, there may be provided an optical film comprising the liquid crystal capsule of the one embodiment. The description regarding the liquid crystal capsule includes the contents described above with respect to the one embodiment.

The optical film may include a matrix and the liquid crystal capsules of the one embodiment dispersed inside the matrix. Content regarding the matrix is not particularly limited, but for example, a transparent material may be used for the matrix. Specific examples of the matrix are not particularly limited, but for example, the matrix may be selected from among polyvinyl alcohol, polyurea, polyacrylic, polyurethane, polyamide including nylon, polyacetal, and polyester.

As a more specific example, the optical film may be formed by coating the capsule solution of the other embodiment on a supporting substrate to form a film.

Specific details regarding the optical film may be applied without limitation to details regarding various conventionally known optical films. For example, all details regarding a structure, a composition, a manufacturing method, physical properties, uses, and the like of the optical film may be applied without limitation to various details widely known in the conventional film field.

However, for example, the optical film may be used for a transmittance variable film.

### 4. Optical device

Meanwhile, according to still another embodiment of the invention, there may be provided an optical device comprising the optical film of the other embodiment. The description regarding the optical film includes the contents described above with respect to the other embodiment.

Details regarding the optical device may be applied without limitation to various conventionally known optical devices. For example, all details regarding a specific structure, a size, a manufacturing method, physical properties, uses, and the like of the optical device may be applied without limitation to various details widely known in the conventional display field.

However, for example, the optical device may be a light modulation device including the optical film of the other embodiment. Specific examples of the light modulation device are not particularly limited, but for example, may include a smart window, an isotropic film, a polarization control film, or a liquid crystal display device, an organic light emitting display device, and the like.

More specifically, as an example of the optical device, a liquid crystal display element having a set of substrates arranged to face each other, electrodes formed on one or both of opposite surfaces of each of the set of substrates, a liquid crystal layer formed by coating the liquid crystal capsule solution of the present invention arranged between the substrates, and an electric field applying means for applying an electric field to the liquid crystal capsules of the present invention in the liquid crystal layer through the electrodes may be exemplified.

The optical device may have a threshold voltage of 50 V or less, or 40 V or less, or 30 V or less, or 20 V or less, or 1 V or more, or 1 V to 50 V, or 1 V to 40 V, or 1 V to 30 V, or 1 V to 20 V, or 20 V to 40 V. The threshold voltage means a voltage at 90% haze of the maximum haze, and as the optical device has the threshold voltage in the range described above, the optical device may be capable of being driven even at a lower voltage. A method of measuring the threshold voltage is not limited, and various methods widely known in the conventional field of liquid crystal-containing optical devices may be applied without limitation. However, for example, the threshold voltage may be measured through a haze meter (Nippon Denshoku, NDH7000) while applying a voltage through a function generator.

In addition, the optical device may have a ΔHaze, which is a difference value between Haze_{off}, which is a haze at an applied voltage of 0 V, and Hazeₒₙ, which is a haze at an applied voltage of 100 V, of 40% or more, or 45% or more, or 49% or more, or 50% or more, or 55% or more, or 58% or more, or 60% or less, or 40% to 60%, or 45% to 60%, or 49% to 60%, or 50% to 60%, or 55% to 60%, or 58% to 60%. As the optical device has the ΔHaze value in the range described above, the optical device may implement a superior haze variation rate even at a lower voltage. A method of measuring the haze is not limited, and various methods widely known in the conventional field of liquid crystal-containing optical devices may be applied without limitation. However, for example, the haze may be measured through a haze meter (Nippon Denshoku, NDH7000) while applying a voltage through a function generator.

### 5. Transmittance variable device

Meanwhile, according to still another embodiment of the invention, there may be provided a transmittance variable device comprising the optical film of the other embodiment. The description regarding the optical film includes the contents described above with respect to the other embodiment.

Details regarding the transmittance variable device may be applied without limitation to various conventionally known transmittance variable devices. For example, all details regarding a specific structure, a size, a manufacturing method, physical properties, uses, and the like of the transmittance variable device may be applied without limitation to various details widely known in the conventional liquid crystal capsule field. However, for example, the transmittance variable device may include a polarization layer and a transmittance variable layer, and the dichroic dye of the one embodiment may be contained as a light modulation material in the polarization layer or the transmittance variable layer.

The transmittance variable device of the present application may be applied to all devices to which transmittance variability may be applied. For example, the transmittance variable device of the present application may be applied to a sunroof, vehicle glass, goggles, sunglasses, a helmet, and the like to provide a transmittance variable device. As long as the transmittance variable device includes the transmittance variable device of the present application, other parts or structures are not particularly limited, and all details known in this field may be appropriately applied.

### [Advantageous Effects]

According to the present invention, there may be provided a liquid crystal capsule, and capsule solution, optical film, optical device, transmittance variable device using the same that may induce a high haze variation rate even at a lower voltage.

### [DETAILED DESCRIPTION OF THE EMBODIMENTS]

Hereinafter, the present disclosure will be explained in detail with reference to the following examples. However, these examples are for illustrative purposes only, and the scope of the present disclosure is not limited thereto.

### <EXAMPLE : Manufacturing of liquid crystal capsule and capsule solution>

### Example 1

0.25 g of polyglyceryl-10 monooleate (Cas number: 79665-93-3; weight average molecular weight: 1203.399 g/mol) as an emulsifier was added to an aqueous solution in which 0.65 g of polyvinyl alcohol (PVA) and 46.5 g of water were mixed, and then stirred and dissolved. Thereafter, 2.3 g of liquid crystal (dielectric anisotropy (△ε) of 15.8, refractive index anisotropy (△n) of 0.2235) was added, and then emulsification was performed at 4,000 rpm for 30 minutes through an IKA homogenizer T25 to form droplets.

Thereafter, a temperature of the solution was raised to 40 °C under stirring to adsorb the PVA on a surface of the droplets for 18 hours.

Thereafter, 1.6 g of a 40% glyoxal aqueous solution was added as a cross-linking agent, and a pH of the solution was adjusted to 3 to cross-link the PVA adsorbed at 40 °C for 18 hours.

After the solution was concentrated for 1 hour using a rotary evaporator, a capsule solution containing liquid crystal capsules was obtained.

### Examples 2

0.25 g of polyglyceryl-10 monomyristate (Cas number: 87390-32-7; weight average molecular weight: 969.16 g/mol) as an emulsifier was added to an aqueous solution in which 0.65 g of polyvinyl alcohol (PVA) and 46.5 g of water were mixed, and then stirred and dissolved. Thereafter, 2.3 g of liquid crystal (dielectric anisotropy (△ε) of 15.8, refractive index anisotropy (△n) of 0.2235) was added, and then emulsification was performed at 6,000 rpm for 30 minutes through an IKA homogenizer T25 to form droplets.

Thereafter, a temperature of the solution was raised to 40 °C under stirring to adsorb the PVA on a surface of the droplets for 18 hours.

Thereafter, 0.8 g of a 40% glyoxal aqueous solution was added as a cross-linking agent, and a pH of the solution was adjusted to 3 to cross-link the PVA adsorbed at 40 °C for 18 hours.

After the solution was concentrated for 1 hour using a rotary evaporator, a capsule solution containing liquid crystal capsules was obtained.

### Examples 3

A liquid crystal capsule and a capsule solution were prepared in the same manner as in Example 1, except that polyglyceryl-10 monostearate (Cas number: 79777-30-3; weight average molecular weight: 1025.3 g/mol) was added instead of polyglyceryl-10 monooleate as the emulsifier.

### Examples 4

A liquid crystal capsule and a capsule solution were prepared in the same manner as in Example 1, except that polyglyceryl-10 distearate (Cas number: 12764-60-2; weight average molecular weight: 1275.7 g/mol) was added instead of polyglyceryl-10 monostearate as the emulsifier.

### <COMPARATIVE EXAMPLE: Manufacturing of liquid crystal capsule and capsule solution>

### Comparative Example 1

0.5 g of polyglyceryl-3 polyricinoleate (Cas number: 68936-89-0; weight average molecular weight: 3054 g/mol) as an emulsifier was added to an aqueous solution in which 1.3 g of polyvinyl alcohol (PVA) and 93.6 g of water were mixed, and then stirred and dissolved. Thereafter, 4.6 g of liquid crystal (dielectric anisotropy (△ε) of 15.8, refractive index anisotropy (△n) of 0.2235) was added, and then emulsification was performed at 6,000 rpm for 30 minutes through an IKA homogenizer T25 to form droplets.

Thereafter, a temperature of the solution was raised to 40 °C under stirring to adsorb the PVA on a surface of the droplets for 18 hours.

Thereafter, 1.6 g of a 40% glyoxal aqueous solution was added as a cross-linking agent, and a pH of the solution was adjusted to 3 to cross-link the PVA adsorbed at 40 °C for 18 hours.

After the solution was concentrated for 2 hours using a rotary evaporator, a capsule solution containing liquid crystal capsules was obtained.

### <EXPERIMENTAL Example>

With respect to the liquid crystal capsule or the capsule solution obtained in the above Examples and Comparative Example, physical properties were measured by the following method, and the results are shown in Table 1.

### 1. Physical properties of liquid crystal capsule film

### (1) Thickness (µm)

After coating the capsule solution on the ITO of a PET-ITO film with a film applicator, a liquid crystal capsule film was prepared by drying at 70 °C for 2 hours. A thickness of the liquid crystal capsule film was measured through Alpha step (KLA TENCOR).

### (2) ΔHaze(%), Threshold Voltage (V)

After laminating (GMP EXCELAM-SMART 655) the ITO surface of a PET-ITO film on an upper portion of the liquid crystal capsule film, an electrode tape was attached to the ITO surface.

Haze_{off}(%), which is a haze of the liquid crystal capsule film to which no voltage is applied (haze at an applied voltage of 0V), and Hazeₒₙ(%), which is a haze of the liquid crystal capsule film to which a voltage is applied through a function generator (haze at an applied voltage of 100V), were measured through a haze meter (Nippon Denshoku, NDH7000), and then ΔHaze = Haze_{off}(%) - Hazeₒₙ(%) was calculated based thereon. And a threshold voltage was obtained through a voltage at 90% haze of the maximum haze.

**[Table 1]**

| Experimental Example Measurement Results | | | | | |
|---|---|---|---|---|---|
| Category | Example 1 | Example 2 | Example 3 | Example 4 | Comparative Example1 |
| Emulsifier | Polyglyceryl-10 monooleate | Polyglyceryl-10 monomyristate | Polyglyceryl-10 monostearate | Polyglyceryl-10 distearate | Polyglyceryl-3 polyricinoleate |
| Thickness (µm) | 25.5 | 28.8 | 29.3 | 24.6 | 26.1 |
| ΔHaze (%) | 58.85 | 45.75 | 49.95 | 57.75 | 38.70 |
| Threshold Voltage (V) | 20 | 20 | 40 | 40 | 60 |

As shown in Table 1, the liquid crystal capsules of the Examples had a threshold voltage in a range of 20 V to 40 V, which was lower than that of the Comparative Example, and a ΔHaze value was measured in a range of 45.75% to 58.85%, which was higher than that of the Comparative Example. Accordingly, it was confirmed that a superior haze variation rate may be implemented while driving is possible at a low voltage.

## Claims

1. A liquid crystal capsule, comprising:
a core containing liquid crystal and an emulsifier; and
a polymer shell formed on a surface of the core;
wherein the emulsifier comprises a polyglyceryl monoester compound or a polyglyceryl diester compound.

2. The liquid crystal capsule according to claim 1,
wherein the polyglyceryl monoester compound or the polyglyceryl diester compound has a weight average molecular weight of 3000 g/mol or less.

3. The liquid crystal capsule according to claim 1,
wherein the polyglyceryl monoester compound or the polyglyceryl diester compound is a reaction product of polyglyceryl and carboxylic acid.

4. The liquid crystal capsule according to claim 3,
wherein the carboxylic acid is an unsubstituted carboxylic acid.

5. The liquid crystal capsule according to claim 3,
wherein the carboxylic acid has a content of a hydroxy group of less than 0.001 mol% based on 100 mol% of the carboxylic acid.

6. The liquid crystal capsule according to claim 3,
wherein the carboxylic acid is a saturated carboxylic acid or an unsaturated carboxylic acid.

7. The liquid crystal capsule according to claim 3,
wherein the carboxylic acid has a carbon number in a range of 10 to 30.

8. The liquid crystal capsule according to claim 1,
wherein the polyglyceryl monoester compound is at least one compound selected from the group consisting of polyglyceryl monooleate, polyglyceryl monomyristate, and polyglyceryl monostearate.

9. The liquid crystal capsule according to claim 1,
wherein the polyglyceryl diester compound is at least one compound selected from the group consisting of polyglyceryl dioleate, polyglyceryl dimyristate, and polyglyceryl distearate.

10. The liquid crystal capsule according to claim 1,
wherein the liquid crystal has a dielectric anisotropy (△ε) of 10 or more.

11. The liquid crystal capsule according to claim 1,
wherein the liquid crystal has a refractive index anisotropy (△n) of 0.2 or more.

12. The liquid crystal capsule according to claim 1,
wherein the core further includes a siloxane-based additive.

13. A capsule solution, comprising the liquid crystal capsule of claim 1 and a solvent.

14. An optical film, comprising the liquid crystal capsule of claim 1.

15. An optical device, comprising the optical film of claim 14.

16. A transmittance variable device, comprising the optical film of claim 14.
